# EUROPEAN PATENT APPLICATION

(11) **EP 0 858 050 A2**
(43) Date of publication of application: **12.08.1998**
(21) Application number: 98101964.9
(22) Date of filing: 05.02.1998
(51) Int. Cl.: G06K 19/077

(54) **Procedure for the continuous manufacture of microchip carrier cards and cards obtained via the seid procedure**

(30) Priority: 07.02.1997 AR 10050897
(71) Applicant: Keylihnk Gestao e Investimentos Lda, D.P. 9000 Funchal, Madeira (PT); Cedinsa S.A., Buenos Aires (AR)
(72) Inventor: Arturo Peluffo, Rodolfo, Vicente Lopez (AR); Luis Bonfico, Carlos, Olivos (AR); Martinez, Marcelo, Vicente Lopez (AR)
(74) Representative: SUGRANES - VERDONCES - FERREGÜELA

(57) **Abstract**

It comprises placing in parallel at least three laminar bodies of a non-conducting material joined together one above the other, defining a single continuous composite band; die-stamping at least the intermediate band with at least one perforation, without die-stamping the other sheets, determining a housing for a microchip; the continuous composite band is then submitted to cutting into individual cards, which posses at least one cavity or housing.

## Description

The present invention has as its principal object a procedure for the manufacture in a continuous manner of microchip carrier cards.

More specifically, the present invention protects an ultra-fast procedure for the manufacture of the said cards from a plurality of superimposed, laminar layers of a dielectric material.

A secondary object of the same is the different cards achieved via the application of the said procedure.

### PRIOR STATE OF THE ART

The cards to which the present invention refers in its two objects, are the so-named "intelligent cards", which are nothing else than a laminar piece which serves as support and is the carrier of a microchip, or of an integrated circuit, and of its cover, which defines the contacts between the aforesaid microchip and the means in which the said card is inserted.

One example of this type of card are those used extensively in public telephones, or more recently information-carrying cards, such as some credit cards, bank cards, etc. In such cases the microchip inserted in the card supplies the application system (for example the telephone system) with the information relative to the quantity of available pulses while discounting those already used, and it has even been foreseen that in the future the same cards will act as an agenda, storing telephone data to facilitate automatic dialling. This and other types of card which are provided with a microchip inserted in them, require an individual manufacturing process with the aim of allowing the housing of the microchip and its cover in a recess formed within the same.

In a first construction, the cards in the presently known state of the art, are thin, monolithic, laminar pieces, which is to say, of substantially two dimensions, constructed in a thermoplastic material of a single piece, an essential condition of which is that the surface of the finished card is flatly continuous, and it is understood that the insert must be housed in a cavity of the carrier card, formed in one of the principal faces of the same, precisely so that the cover of the microchip, carrier of the interface between the microchip and the medium in which it is applied, also remains substantially coplanar to the card.

The usual, known procedure to construct the said cavity in these cards, of a single sheet of a plastic material, consists of the realisation of a first milling abrasion of a generally quadrangular shape made in a small area of the surface of the card. Within the machining stage of the card and following this same stage, a second abrasion is made, also by milling, and of a greater depth without touching the bottom, this second abrasion being generally of a circular shape, centred in the previous cavity and of a lesser area, defining a cavity of little depth, opening towards the upper face of the card and blind with respect to the lower face of the same, which defines its bottom.

In a second embodiment of known cards, the microchip is hidden within the dielectric, laminar body. The housing is made in these cards by machining by means of milling machinery, inserting the microchip, and then injecting a layer of the same polymer which closes the cavity, leaving the upper face of the card smooth.

It is to be noted that the material which composes the laminar carrier piece of the card is made in a dielectric or non-conducting material, such as a single sheet of plastic material with the adequate thickness.

After having made this excavation in the body of the card, the microchip is placed in the cavity where it belongs.

In the case of the cards mentioned in the first instance, the circular cavity deeper than the first, houses the microchip. The cover sits over the said first cavity and adheres by its edges along the quadrangular perimeter of the first. The depth of both cavities is such that the surface of the cover will be substantially coplanar with the surface of the card, the bottom of the cavity and the lateral walls of the cavity determining an isolating housing for the microchip.

In the second case, the microchip sits integrally inside the cavity and is then covered by a layer of the same material, creating a continuous surface which hides the microchip terminals.

In the present invention the term "milling" covers all tools capable of abrading a part of the flat face of the piece in plastic material, creating the said cavities by chip flow of material. However, this operation involves expensive, numeric control machines, and this operation requires a relatively large amount of time compared to the final cost of the card, given that the described procedure requires the use of milling heads which implies the necessity of applying high precision instruments and so high costs, to achieve an adequate work speed with high production for the creation of the microchip housing, which would raise the cost excessively in respect to the card's utility in the case that a card was desired which could house more than one microchip or integrated circuit within itself.

The same is valid for the second type of card, due to the need to cover the hollow, implying an additional step of significant cost.

### OBJECTS OF THE PRESENT INVENTION

It is a main object of the present invention to provide a high-speed, continuous, manufacturing procedure for laminar cards realised in multi-layer bodies, provided with at least one carrier housing for a microchip or integrated circuit to be housed within the same.

It is a secondary object of the present invention the cards produced using the said procedure.

### SUMMARY OF THE INVENTION

Therefore it is object of the present invention a procedure for the continuous manufacture of microchip carrier cards which comprises the superposition in parallel of at least three laminar pieces made of a dielectric material, such as plastic and / or cellulose, or combinations of the same, joined together forming a single, multi-layer, laminar piece, the intermediary piece at least having a punched hole which defines a housing for a microchip.

In a first version of the procedure of the invention, a first, upper piece is die-stamped on one of its principal faces, at predetermined and identical distances, forming a series of first through holes; a second, intermediate piece, is die-stamped at similar intervals to those of the previous piece, the resulting perforations defining second through holes, inscribed within the area of the first holes and of a lesser area than these; a third band, named lower band, is not die-stamped; these three layers are joined, for example, by interposing a coating of adhesive between at least one of the surfaces of the first and second pieces facing each other, and another coating of adhesive between at least one of the surfaces of the second and third pieces facing each other, adhering the first band to the second and both to the third, submitting the composite continuous band to mangling or pressure, determining a plurality of housings equally spaced and with a blind bottom, opening towards the top and of a cavity of a variable geometry; the composite, continuous, laminar piece is submitted to cutting in individual laminar cards, each card having at least one of the said housings; if in contrast the bands are polymeric and thermoplastic, they are adhered together by way of ultra-sonic soldering.

As a first alternative of the procedure, it is considered, in the case of employment of adhesives between the layers, to adhere firstly the same excluding the area which the first and second through holes define, and then by cutting-punch, the depth of the cut carefully registered (named "half cut" technique), proceed to cutting and removing the corresponding material from the first and second hole, which can be removed through not being adhered by adhesive to the third laminar layer.

As a third alternative, in any of the two previously mentioned, only the intermediate layer is die-stamped. Then it is adhered or joined to the lower, the microchip is placed inside (the cavity) and the entirety is adhered to the third upper layer, smooth and blind.

### DESCRIPTIVE MEMORY

In accordance with the form of execution of the invention illustrated in the adjoining drawings, the perforation made in the so-named first band or laminar piece is preferably of a quadrangular shape for the housing of a microchip cover of equal shape. Also in accordance with the present invention, the resulting perforation of the die-stamping of the so-named second band or laminar piece is of a circular shape of a lesser area than the perforation of the first band, for the housing of a microchip of equal shape. Following, the procedure of the invention envisages the insertion of the microchip and cover of the same by the known procedures.

These and other salient characteristics of the invention will become apparent during the course of the present description, which will be made with reference to the drawings which accompany and which are simply illustrative, and in no way limiting, and which illustrate one single manner of the preferred forms of achieving the object of the present invention, the other possible forms of attainment being explained without the aid of drawings.

In accordance with that represented:
Figure 1 shows the stage sequences, in accordance with one version of the procedure of the present invention, for the continuous production of cards with the carrier cavities of the microchip and cover;
Figure 2 shows a perspective view of the components of the laminar bands, already die-stamped, before being assembled, showing the die-stamped through holes for the two first bands;
Figure 3 illustrates in the same perspective of figure 2, one portion of the already die-stamped card and with the laminar components already assembled, without the microchip, which is to say, showing the obtained cavity;
Figure 4 shows schematically the portion of the card according to figure 3 with the cover of the microchip or integrated circuit assembled in the cavity;
Figure 5 is a section view of the cavity of figure 3 according to the plan of section AA of the same.

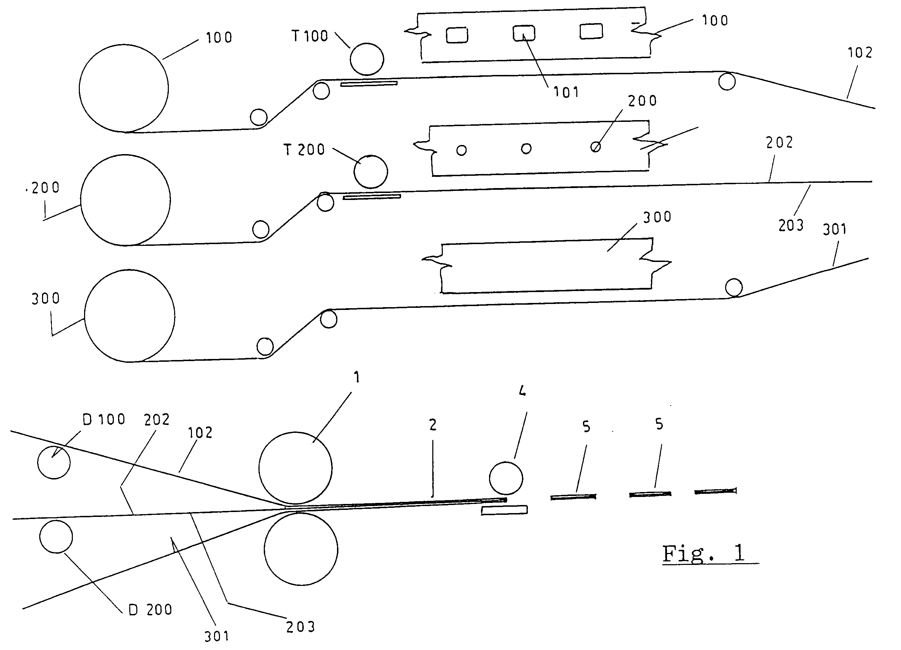

Figure 1 shows schematically how from three different spools of laminar bands, the cards are obtained with the perforations which create the said housing.

This first version of the procedure starts in the first stage having available three independent and separate spools, (100), (200) and (300), each one consisting of a laminar band of polymeric material or cellulosic material, such as paperboard or similar, these paperboards possibly being covered on their external face with a coating of impermeable material, if desired, or could be composite or jacketed coatings.

The spool (100) is that which provides the first upper band, constituting the spool (200) that which provides the second band or intermediate band, and the spool (300) the lower band.

The upper band (100) in the die-stamping station (T100) suffers a series of first regularly spaced through perforations (101). These perforations (101) have a generally quadrangular perimeter, although there is nothing which impedes the modification of their geometry.

The important concept to emphasise is that this die-stamping is continuous and is preferably carried out with a die-stamping roller.

The second band (200) is similarly die-stamped with a plurality of second through holes (201) in the die-stamping station via the die-stamp (T200).

The holes (201) are in register with respect to the holes (101), in such a manner that the second holes (201) are inscribed within the area described by the first holes (101).

The third band (300) does not suffer any perforation whatsoever, and remains as a continuous band.

In any regard, in another version of the procedure of the invention, not illustrated, it is envisaged that the first band (100) and the second band (200) do not come from a spool and are flat sheets, which are similarly die-stamped with the first plurality of through holes (101) & (201) respectively via resources known in the field.

Then, the two die-stamped bands and the third undie-stamped band are sent to the adhesion station, which in (D100) and in (D200) apply a coating of adhesive.

Returning to the illustrated version of the procedure, this adhesion station is also achieved using resources and registers known in the field, so that it is possible to adhere in (D100) either the lower face (102) of the first band (100) or the upper face (202) of the second band, (101-202) obviously facing each other.

Similarly, in (D200) it is possible to adhere either the lower face (203) of the second band (200) or the upper face (301) of the third band (300), (203-301) facing each other.

On having established the said adhesive coatings with the glue spreaders and their registers in (D100) and (D200), in the mangle station (1) the minimum of three layers have pressure applied between them, giving form to the continuous band (2) with the housings (3) (See other drawings) placed at regular distances along the length of the band (2).

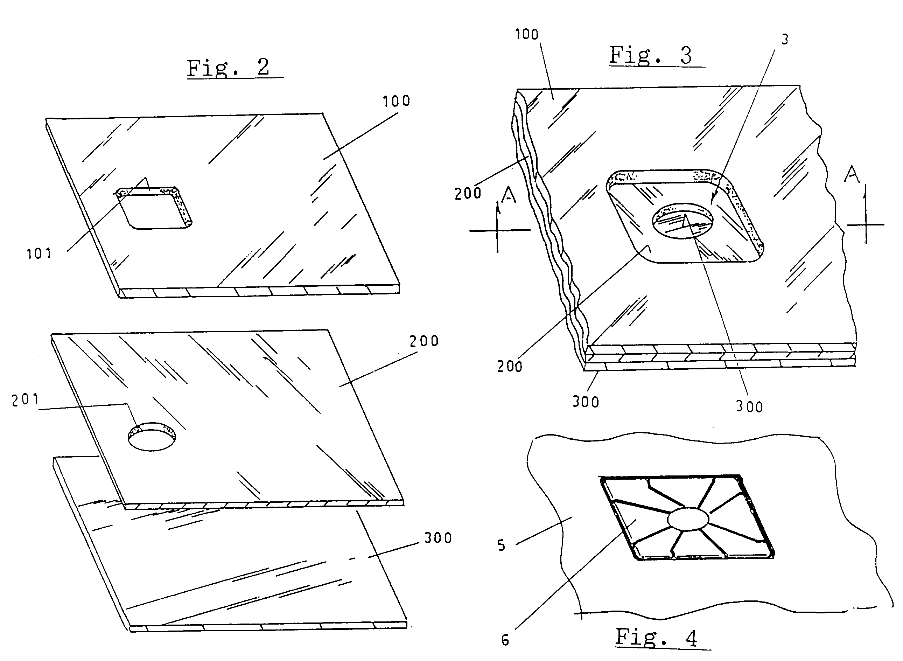

Lastly, the cutting station in (4) sections the band in individual cards (5), each one a carrier of at least one cavity to house a microchip or integrated circuit, of which in figure 4 can be observed only the cover with the connectors (6) which emerge substantially coplanar with the card (5).

In a second variation of this example of the manufacturing procedure, it is envisaged that the sheets be of a polymeric material, and therefore it is feasible connecting them together by way of adhesive or by way of ultrasound.

In a third variant of the procedure of the invention, not illustrated, it is feasible first adhering three laminar sheets of paperboard in the adhesion stations (D100-D200), those placed as the first station, with the particularity that the adhesive between the two first sheets (100- 200) leaves an area of the said sheets without adhesive, which substantially corresponds to the area of the first perforation (101); similarly between the sheet (200 - 300) adhesive is applied, except for in an area corresponding to the second perforation.

Once the multi-laminar sheet of continuous card (2) has been achieved, the same enters into a single die-stamping station, with a single die-stamp, which via the "half cut" technique, cuts the cardboards along the length of the respective edges and depths of the first and second sheet, which, there being no adhesive in that particular area, leaves the sheets "free", which allows the cut material to be extracted, creating the cavity.

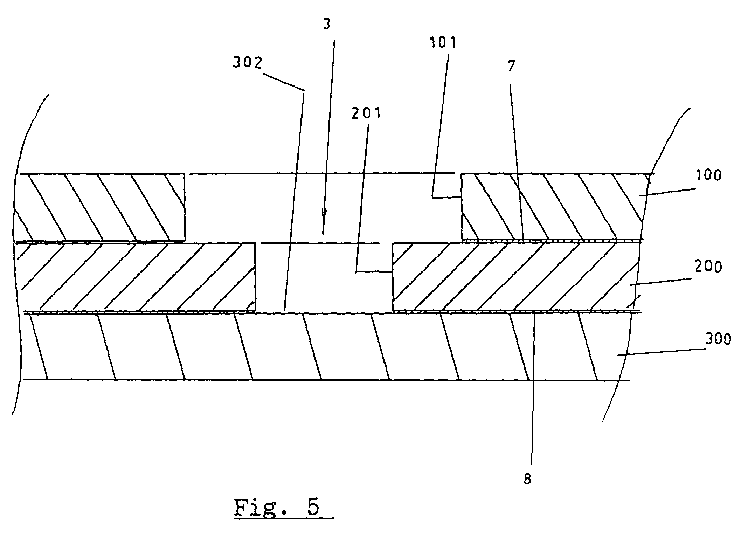

Figure 5 shows section AA of figure 3, in which can be observed how the portion (302) of the third sheet (300) which faces the holes (101- 201) acts as a base and closure of the hollow or housing (3), there being interposed between (100- 200) the coating of adhesive (7), and between (200 -300) the coating of adhesive (8).

It is preferred that traditionally the cavity (3) is initially quadrangular for the housing of the cover (6) and a deeper circular cavity (201) for the housing of the microchip (not illustrated). The circular cavity (201) is centred in the cavity (101). The depth of cavities (101) and (201) is substantially equal to the thickness of the cover (6) and the microchip, respectively.

According to the present invention, it is possible to create in each card more than one housing for an integrated circuit. It is also very simple to modify the form of the cavity (3) which allows circuits of different sizes and properties to be housed given the low fabrication cost and the extremely high production speed, which reduces the cost of the support card to a minimal value.

It is also possible to obtain composite bands, which is to say, one layer of paperboard, another of plastic material, etc. the paperboard being covered or not with an impermeable material.

Furthermore, if the base or bottom (302) was of very little thickness, it is possible to assure that the third sheet is of a greater thickness or grade than the other two, or else use two sheets (300).

One last execution of the procedure of the invention is also valuable, through which, and employing either of the above mentioned procedure alternatives, allows the realisation of a card composed of a blind, lower layer; the intermediate layer possesses a through hole which defines the hollow for the microchip and the upper layer being smooth or blind, defining the continuous, upper face of the card.

## Claims

1. Procedure for the continuous manufacture of microchip carrier cards characterised in that it comprises placing in parallel, at least three laminar bodies of a non-conducting material, these being at least three laminar bodies joined together one above the other defining a single, continuous, composite band; with at least the intermediate band being die-stamped with a cutting punch capable of removing the total shape of laminar material corresponding to at least one perforation, without die-stamping the other sheets, determining a housing for a microchip; the continuous, composite band is then submitted to cutting into individual cards, which possess at least one cavity or housing obtained in this manner.

2. Procedure for the continuous manufacture of microchip carrier cards, in accordance with that claimed in claim 1, characterised in that the continuous bands are provided in rolls or spools; a first band is die-stamped at identical and predetermined distances defining first through holes; a second band is die-stamped at similar intervals to the previous band, the resulting perforations being second through holes of a lesser area than those of the perforation of the first band, the second holes registering and coinciding with respect to the first holes and inscribed within the area of the same; a third belt is not die-stamped; an adhesive coating is interposed between the first and second band; and between the second and third band, adhering the first band to the second and both to the third, subjecting the composite band to mangling or pressure, with the second through hole inscribed within the area of the first through hole; the continuous, composite band is subjected to cutting into individual cards, each one having at least one hollow for the housing of a microchip.

3. Procedure for the continuous manufacture of microchip carrier cards, in accordance with that claimed in claim 1, characterised in that the continuous bands are adhered together, except in the areas corresponding to the first and second perforation, where the respective bands are not joined together, and thereafter the single, composite band is subjected to a die-stamping operation, via the "half cut" technique employing a single cutting punch capable of removing the material of the first sheet corresponding to the first perforation, and the material of the second sheet corresponding to the second perforation, the composite band being then cut into individual cards, each one of them containing at least one cavity for the housing of the integrated circuit.

4. Procedure for the continuous manufacture of microchip carrier cards, in accordance with that claimed in claim 1, characterised in that the continuous bands are provided in rolls or spools, each said band being chosen from among laminar belts of polymeric material or paperboard, covered or not covered with polymeric coatings.

5. Procedure for the continuous manufacture of microchip carrier cards, in accordance with that claimed in claim 1, characterised in that the three laminar bands are of equal material and thickness.

6. Procedure for the continuous manufacture of microchip carrier cards, in accordance with that claimed in claim 1, characterised in that the bands are of different materials and thicknesses.

7. Procedure for the continuous manufacture of microchip carrier cards, in accordance with that claimed in claim 4, characterised in that the continuous bands are of thermoplastic material adhered together via ultrasonic soldering.

8. Procedure for the continuous manufacture of microchip carrier cards, in accordance with that claimed in claims 1 to 7, characterised in that the first stage comprises arranging the third sheet or lower sheet without any perforation whatsoever and being joined to the second sheet or intermediate sheet, provided with at least one through hole of the height of the microchip; in that an integrated circuit is installed in a second stage in each housing so defined; then in a third stage a first sheet is applied over the free face of the second sheet or intermediate sheet, this first sheet without any hollow whatsoever and joined to the second sheet.

9. Microchip carrier card, obtained according to the procedure claimed in claims 1 to 8, characterised in that it is composed of at least three laminar layers chosen from among cellulosic and polymeric materials, joined together forming a single body, the intermediate layer at least having at least one die-stamp, at least the lower laminar layer being smooth and free of perforations, defining a bottom for the cavity or housing formed by at least the die-stamp of the intermediate sheet inside of which is housed an integrated circuit.

10. Microchip carrier card, in accordance with that claimed in claim 9, characterised in that it is composed of at least three laminar layers chosen from among cellulosic and polymeric materials joined together by adhesive coatings, the upper laminar layer having at least one first die-stamp and the second layer a second die-stamp, inscribed within the area of the first die-stamp, the third layer being blind and continuous, defining a bottom for the cavity or housing formed by the two first die-stamps.

11. Microchip carrier card, in accordance with that claimed in claim 9, characterised in that it has more than one housing or cavity, these cavities being chosen from among those of equal or different geometry.

12. Microchip carrier card, in accordance with that claimed in claim 9, characterised for the sheets being of different thicknesses.
